Europäisches Patentamt

European Patent Office

Office européen des brevets

(19)

(11) Numéro de publication : **0 179 709**
**B1**

(12) **FASCICULE DE BREVET EUROPÉEN**

(45) Date de publication du fascicule du brevet :
17.05.89

(51) Int. Cl.⁴ : **B 29 C 55/06**

(21) Numéro de dépôt : **85401978.3**

(22) Date de dépôt : **10.10.85**

(54) Procédé et dispositif d'étirage en continu d'un film en matière plastique.

(30) Priorité : **11.10.84 FR 8415587**

(43) Date de publication de la demande :
**30.04.86 Bulletin 86/18**

(45) Mention de la délivrance du brevet :
**17.05.89 Bulletin 89/20**

(84) Etats contractants désignés :
**AT CH DE GB IT LI NL SE**

(56) Documents cités :
CH–A– 456 933
DE–A– 2 635 585
FR–A– 1 353 056
FR–A– 1 411 349
FR–A– 1 413 922
FR–A– 1 563 429

(73) Titulaire : **NEWTEC INTERNATIONAL**
**Boulevard Lepic**
**F-73106 Aix-les-Bains (FR)**

(72) Inventeur : **Thimon, Hubert**
**102, avenue de Marlioz**
**F-73100 Aix Les Bains (FR)**

(74) Mandataire : **Derambure, Christian**
**BUGNION ASSOCIES 55, rue Boissonade**
**F-75014 Paris (FR)**

Jouve, 18, rue St-Denis, 75001 Paris, France

**EP 0 179 709 B1**

## Description

La présente invention concerne un procédé et un dispositif d'étirage en continu d'un film en matière plastique.

Dans de nombreuses applications, en particulier pour l'emballage de charges, on utilise des films de matière plastique que l'on étire longitudinalement, principalement pour effectuer des économies de matière.

On connaît des procédés et des appareils dans lesquels on fait défiler le film en engagement avec deux rouleaux successifs entraînés à des vitesses tangentielles différentes, le second rouleau — dans le sens de défilement du film — ayant une vitesse tangentielle supérieure à celle du premier rouleau.

Dans un modèle simple d'appareil connu, un moteur unique entraîne les deux rouleaux par l'intermédiaire d'une transmission à engrenages. L'inconvénient de cet appareil est que le rapport d'étirage est figé par les caractéristiques de la transmission.

Lorsqu'on désire obtenir des rapports d'étirage différents, par exemple lorsqu'on utilise des films de différents matériaux, il est naturellement possible de prévoir une transmission à plusieurs rapports.

Cependant, pour certaines applications, il est nécessaire d'obtenir un rapport d'étirage variable depuis la valeur 1, c'est-à-dire un défilement du film sans étirage, jusqu'à une valeur donnée R. Dans ce cas, les transmissions à plusieurs rapports sont inapplicables.

Dans la demande de brevet FR-A-2 535 297 on a décrit un dispositif dans lequel les deux rouleaux sont entraînés à vitesses angulaires constantes et où l'on fait varier leur diamètre utile, de manière à faire varier leurs vitesses tangentielles respectives depuis la valeur 1 jusqu'à une valeur donnée E.

Bien que ces appareils donnent des résultats particulièrement satisfaisants, ils sont de réalisation relativement coûteuse, notamment en raison du mécanisme assurant la variation des diamètres utiles respectifs des deux rouleaux.

Le document CH-A-456 933 décrit un dispositif d'étirage longitudinal de film au moyen de rouleaux à vitesses périphériques différents et d'un rouleau chauffant initial. Ce document vise à résoudre le problème d'assurer l'étirage sur une longueur bien définie et réglable, en dehors du rouleau chauffant. Les deux rouleaux de transport et de traction sont d'écartement réglable, le film étant en permanence à leur contact. Selon une caractéristique seulement optionnelle, la longueur d'étirage est subdivisée en plusieurs longueurs d'étirage partiel. Selon le document CH-A-456 933, le film est en permanence au contact de trois rouleaux et les rouleaux d'entrée et de sortie ont chacun une vitesse périphérique constante de sorte que le degré d'étirage du film est également constant. En conséquence, le document CH-A-456 933 ne pose pas le problème de la variation du degré d'étirage et n'apporte aucune solution à ce problème.

Le document DE-A-2 635 585 concerne le gaufrage d'un film et prévoit plusieurs rouleaux dont un fixe et d'autres mobiles, le film étant en permanence au contact de trois rouleaux entraînés par des pignons identiques par un même moteur. Le dispositif selon le document DE-A-2 635 585 ne peut provoquer une élongation longitudinale du film.

Le but de la présente invention est donc de proposer un procédé et un appareil permettant de faire varier le rapport d'étirage entre des valeurs prédéterminées tout en étant de construction simple, robuste et peu onéreuses.

A cet effet, la présente invention propose un procédé d'étirage longitudinal en continu d'un film en matière plastique dans lequel d'une part, on entraîne au moins trois rouleaux à des vitesses tangentielles différentes, et, d'autre part, on étire longitudinalement le film par engagement sur au moins un premier rouleau et un second rouleau dont la vitesse tangentielle est supérieure à celle du premier rouleau, caractérisé en ce que l'on sélectionne le nombre et ceux des rouleaux en engagement avec le film, ce qui permet de modifier la vitesse de défilement du film de son entrée à sa sortie et a pour résultat de faire varier le degré d'étirage du film par degrés successifs entre des valeurs prédéterminées, selon le rapport des vitesses tangentielles des rouleaux à la sortie et à l'entrée.

De cette manière, si l'on désigne les trois vitesses tangentielles respectives des rouleaux par $V_1$, $V_2$ et $V_3$ dans la relation $V_1 \leqslant V_2 \leqslant V_3$, on pourra obtenir les différents rapports d'étirage suivants : 1 lorsqu'un seul rouleau est en engagement avec le film, $V_2/V_1$ ou $V_3/V_2$ lorsque deux rouleaux sont en engagement avec le film, et enfin $V_3/V_1$ lorsque les trois rouleaux sont en engagement avec le film.

On conçoit qu'on obtient ainsi une variation non pas continue du rapport d'étirage, mais par degrés successifs qui est largement satisfaisante dans de nombreuses applications, et ce, grâce à un agencement particulièrement simple. En effet, puisque chaque rouleau a une vitesse tangentielle donnée, on peut donc prévoir des rouleaux à diamètre fixe et entraînés par une transmission à simple rapport, de construction économique, fiable et robuste.

Naturellement, on peut prévoir un nombre de rouleaux n supérieur à trois et l'invention propose un dispositif particulièrement avantageux pour assurer l'entraînement de tous les rouleaux à l'aide d'un moteur commun.

L'invention sera mieux comprise à la lecture de la description qui va suivre en se référant aux dessins annexés, dans lesquels :

2

La figure 1 est une vue latérale, partie en élévation, partie en coupe longitudinale, d'un dispositif conforme à l'invention ;

Les figures 2, 3, 4 et 5 sont des vues schématiques, prises suivant II-II à la figure 1, illustrant quatre phases successives de fonctionnement du dispositif ;

la figure 6 est une vue similaire à celle des figures 2 à 5, illustrant une variante du dispositif ;

la figure 7 est une vue similaire à la précédente, illustrant une autre variante du dispositif ;

la figure 8 est une vue similaire aux précédentes illustrant une autre variante du dispositif ;

la figure 9 est une vue partielle schématique d'une autre forme de réalisation de l'invention ; et

la figure 10 est une variante de réalisation de la figure 2.

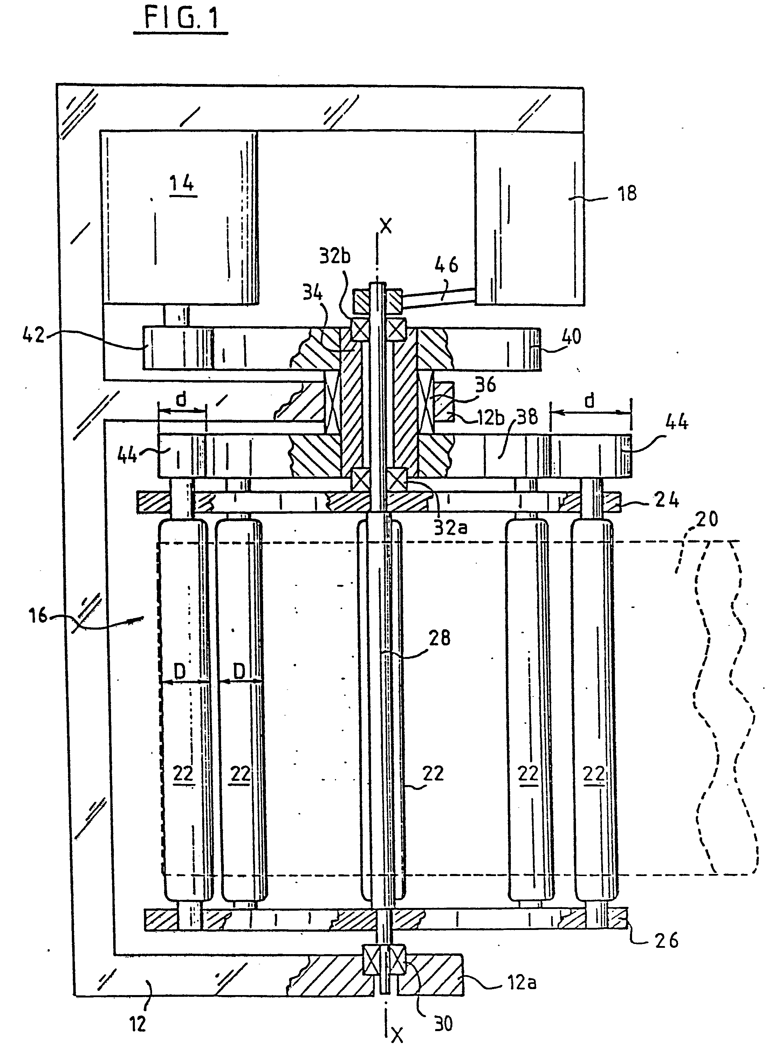

Un exemple de réalisation d'un appareil 10 conforme à l'invention, illustré à la figure 1, comporte un bâti 12 sur lequel sont montés un moteur d'entraînement 14, un équipage d'étirage 16 et un variateur 18. Comme indiqué en pointillé, cet appareil est destiné à étirer axialement un film 20 en matière plastique.

L'équipage d'étirage 16 comprend un certain nombre de rouleaux 22 cylindriques parallèles, disposés sensiblement régulièrement autour d'un axe principal XX. Dans l'exemple représenté, il y a 8 (huit) rouleaux 22, dont seulement 5 (cinq) situés en arrière du plan de coupe sont visibles.

Les rouleaux 22 tourillonnent dans deux flasques radiaux 24, 26 solidaires d'un arbre 28 de variateur centré sur l'axe XX et lui-même monté à rotation sur le bâti 12, d'une part directement, à son extrémité inférieure, par l'intermédiaire d'un roulement 30 monté dans une branche 12a du bâti et, d'autre part, indirectement, à son extrémité supérieure, par l'intermédiaire de roulements 32a, 32b montés dans une douille cylindrique 34 traversant une branche 12b du bâti avec roulement 36 interposé.

La douille 34 est solidaire de deux couronnes dentées, l'une 38 est adjacente au flasque supérieur 24 et sera dénommée couronne d'entraînement et l'autre 40 est situé au-delà de la branche 12b et sera dénommée couronne motrice.

La couronne motrice 40 engrène avec un pignon 42 de sortie du moteur 14.

De son côté, la couronne d'entraînement 38 engrène avec des pignons 44 solidaires des rouleaux 22 d'une manière qui sera explicitée plus loin.

Enfin, l'arbre de variateur 28 dépasse de la douille 34 et est rigidement relié à un levier de variateur 46 mû par le variateur 18.

Comme représenté aux figures 1 et 2 à 4, dans cette forme de réalisation, les rouleaux 22 ont tous le même diamètre D, tandis que les pignons 44 des rouleaux 22 ont des diamètres différents $d_1$, $d_2$ ... $d_8$. Plus précisément, ces diamètres sont dans la relation :

$$d_8 < d_7 < d_6 < d_5 < d_4 = d_3 = d_2 = d_1 ;$$

de la sorte, lorsque le moteur fonctionne, les rouleaux présentent des vitesses tangentielles différentes, obéissant à la relation :

$$V_8 > V_7 > V_6 > V_5 > V_4 = V_3 = V_2 = V_1.$$

Si l'on considère le film 20, qui est enroulé sur un secteur d'environ 180° autour des rouleaux 22, depuis l'entrée 20e jusqu'à la sortie 20s, on constate que selon l'orientation imposée aux flasques 24, 26 par le variateur 18, le film sera en contact avec 4 ou 5 rouleaux successifs des huit rouleaux, ces rouleaux ayant alors un axe fixe.

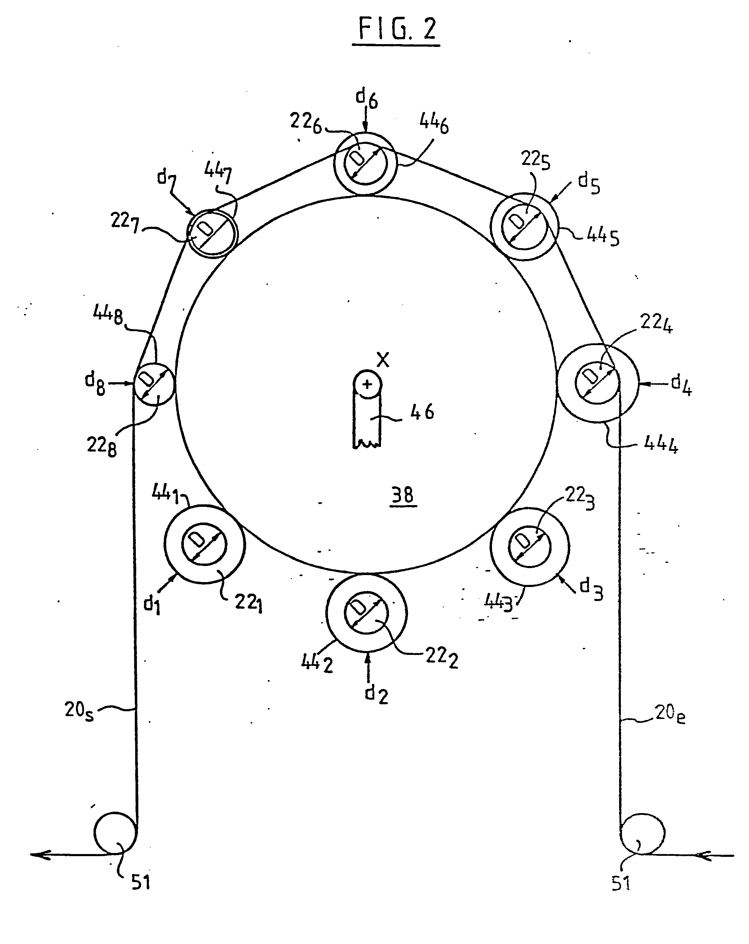

Selon l'orientation de la figure 2, le film est en contact avec les rouleaux $22_8$, $22_7$, $22_6$, $22_5$ et $22_4$ et par conséquent, sa vitesse de défilement passe successivement, de son entrée à sa sortie, de $V_4$ à $V_5$, $V_6$, $V_7$ puis $V_8$ ce qui provoque un étirage longitudinal du film dans un rapport $V_8/V_4$ ou encore $d_4/d_8$.

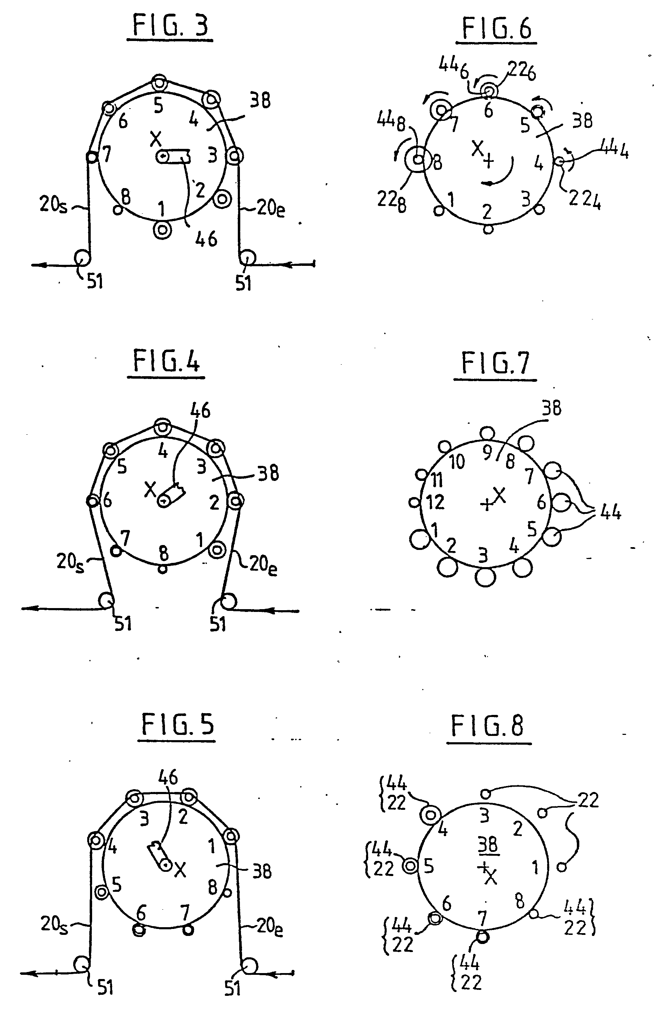

Si l'on modifie l'orientation en un premier temps (figure 3), le film sera en contact avec les rouleaux $22_7$, $22_6$, $22_5$, $22_4$ et $22_3$ ; comme la vitesse tangentielle du rouleau $22_3$ est égale à celle du rouleau $22_4$, le rapport d'étirage sera égal à $V_7/V_4$, ou encore $d_4/d_7$ et par conséquent inférieur au rapport précédent puisque $d_7$ est supérieur à $d_8$.

Selon l'orientation de la figure 4, le rapport d'étirage n'est plus que $d_4/d_6$ et enfin, selon l'orientation de la figure 5, le film est en contact avec les seuls rouleaux $22_4$, $22_3$, $22_2$ et $22_1$ dont les vitesses tangentielles sont égales et le rapport d'étirage est égal à 1/1 ; autrement dit, il n'y a plus d'étirage dans cette situation.

On constate que l'invention permet d'une manière simple de passer graduellement d'un rapport d'étirage 1/1 à un rapport d'étirage donné dans les applications où il est nécessaire d'obtenir une telle variation d'étirage, comme par exemple le banderolage de charges dans le domaine de l'emballage.

L'invention peut naturellement faire l'objet de nombreuses variantes.

Par exemple, à la figure 6, les pignons des rouleaux 22 ont tous le même diamètre d, tandis que les rouleaux eux-mêmes ont des diamètres différents

$$D_8 > D_7 > D_6 > D_5 > D_4 = D_3 = D_2 = D_1.$$

Le nombre de rouleaux peut également être différent de huit. Il a été représenté à la figure 7, un exemple de réalisation à douze rouleaux.

EP 0 179 709 B1

Dans la mesure où les rouleaux $22_3$, $22_2$ et $22_1$ n'ont aucun rôle dans l'étirage du film, il n'est pas nécessaire de les entraîner et on pourra omettre les pignons correspondants et simplement monter ces rouleaux « fous » dans les flasques 24 et 26 (Figure 8).

Le variateur 18 peut être du type manuel ou motorisé et être asservi au déroulement d'un processus lié à l'utilisation du film étiré.

De préférence, les rouleaux auront des vitesses tangentielles étagées de manière progressive. A cet égard, on remarquera que la solution (Figure 6) dans laquelle les pignons 44 ont tous le même diamètre d et les rouleaux 22 ont des diamètres différents $D_1$, $D_2$ ... $D_n$ est avantageuse.

De préférence également, les rouleaux seront revêtus d'un matériau présentant un fort coefficient de frottement vis-à-vis du matériau de film, comme par exemple du caoutchouc ou un polyéthylène. En effet, il y a lieu de tenir compte du fait que le film est en contact avec chaque rouleau suivant un secteur angulaire relativement limité.

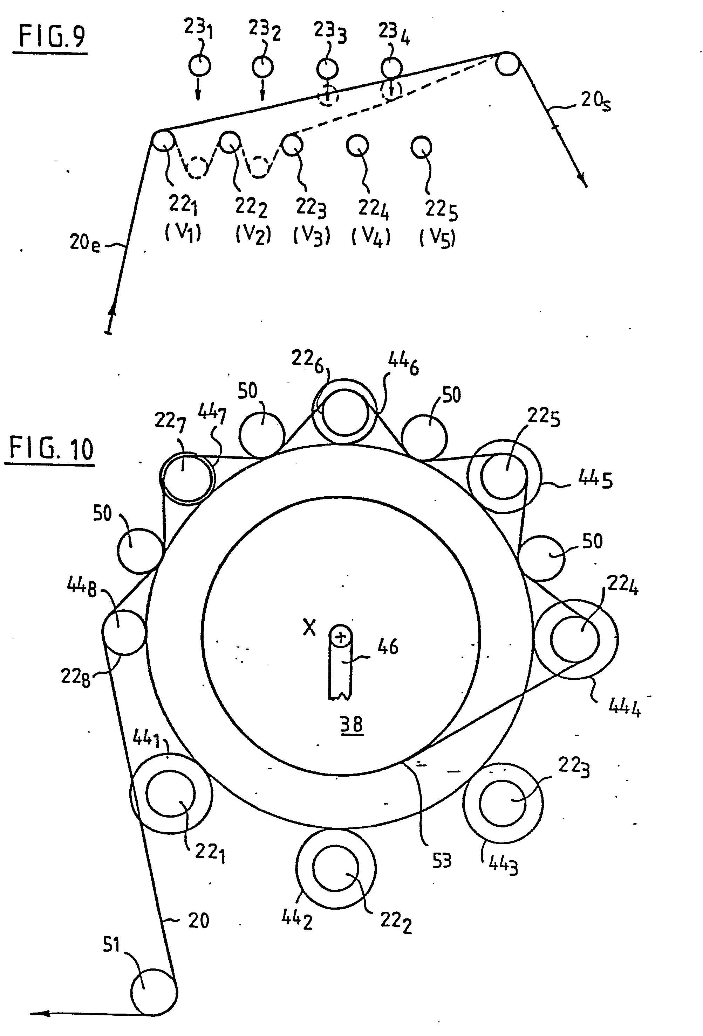

Préférentiellement, (Figure 10), le dispositif comporte également des moyens supplémentaires d'adhérence du film sur les rouleaux 22. Ces moyens sont par exemple constitués par au moins un rouleau supplémentaire 50 monté fou, voisin d'un rouleau 22, d'axes parallèles à ceux des rouleaux 22 et portés par le bâti 12 directement ou indirectement placés — par rapport au film 20 — du côté opposé des rouleaux 22, placé de manière que le film 20 soit appliqué sur le rouleau 22 voisin sur un plus grand arc de cercle que si le rouleau 50 n'existait pas. Préférentiellement, il est prévu un rouleau 50 entre deux rouleaux 22 adjacents. Le rouleau 50 est alors placé de manière que le film au lieu d'être rectiligne entre les deux rouleaux 22 soit incurvé, du fait du rouleau 50, à convexité tournée vers l'axe XX.

En variante, ces rouleaux 50 sont montés d'axes mobiles pour pouvoir être écartés des flasques 24 et 26 et des rouleaux 22, de manière que la position relative d'ensemble des rouleaux 22 par rapport aux rouleaux 50 puisse être modifiée ce qui permet de faire varier le degré d'étirage du dispositif.

Egalement, préférentiellement, les deux rouleaux de renvoi 51 du film 20 sont rapprochés l'un de l'autre de manière que le contour du film 20 se rapproche davantage de celui d'un Ω et non d'un U (à fond incurvé) (Figure 4).

Enfin, également en variante (Figure 10), le film 20 provient d'une bobine 53 logée à l'intérieur même de l'espace cylindrique vide délimité par les rouleaux 22. L'entrée 20e du film pousse alors entre deux rouleaux 22. Cette disposition a l'avantage de réduire de façon considérable l'encombrement général du dispositif. En conséquence, il est prévu des moyens support de bobine 53 d'axe XX.

D'autre part, la disposition des rouleaux pourra être différente de la disposition régulièrement répartie autour d'un axe comme représenté. Notamment, on pourra disposer les rouleaux entraînés 22 en ligne (Figure 9) et prévoir une série de rouleaux fous 23 intercalaires qui peuvent être introduits séquentiellement entre les rouleaux entraînés de manière à amener le film graduellement en contact avec 2, 3, 4 ... etc... rouleaux entraînés selon le rapport d'étirage désiré.

Au-delà de toutes ces variantes, l'aspect important de l'invention réside dans le fait que l'on réalise l'étirage à l'aide de rouleaux mûs à des vitesses tangentielles différentes, les rouleaux étant au moins au nombre de trois, et que l'on peut choisir sélectivement le nombre de rouleaux en engagement avec le film, de manière à obtenir des rapports d'étirage différents selon le choix des rouleaux en engagement.

De manière générale, l'invention concerne tout système à n rouleaux mûs à des vitesses tangentielles $V_1$, $V_2$, $V_3$, $V_i$, ..., $V_n$ comportant des moyens pour engager p rouleaux, de rang $i + 1$ à $i + p$, avec le film et dans lequel les vitesses tangentielles sont telles que

$$V_n > N_{n-1} > ... > V_p = ... = V_1.$$

Le dispositif qui vient d'être décrit l'a été dans le cas où il est fixe dans son ensemble et vertical. Il va de soi cependant qu'il peut être placé horizontalement ou être incliné ou être mobile dans son ensemble, par exemple embarqué sur un chariot mobile verticalement d'une machine d'emballage.

## Revendications

1. Procédé d'étirage longitudinal en continu d'un film (20) en matière plastique dans lequel d'une part, on entraîne au moins trois rouleaux (22) à des vitesses tangentielles différentes, et, d'autre part, on étire longitudinalement le film par engagement sur au moins un premier rouleau ($22_4$) et un second rouleau ($22_5$) dont la vitesse tangentielle est supérieure à celle du premier rouleau, caractérisé en ce que l'on sélectionne le nombre et ceux des rouleaux (22) en engagement avec le film (20), ce qui permet de modifier la vitesse de défilement du film (20) de son entrée à sa sortie et a pour résultat de faire varier le degré d'étirage du film (20) par degrés successifs entre des valeurs prédéterminées, selon le rapport des vitesses tangentielles des rouleaux (22) à la sortie et à l'entrée.

2. Procédé selon la revendication 1 caractérisé en ce que pour sélectionner les rouleaux (22) en engagement avec le film (20), on modifie l'orientation de flasques dans lesquels tourillonnent les rouleaux.

3. Procédé selon l'une quelconque des revendications 1 et 2 caractérisé en ce qu'on entraîne tous les rouleaux (22) y compris ceux n'ayant aucun rôle dans l'étirage.

4

4. Procédé selon l'une quelconque des revendications 1 et 2 caractérisé en ce qu'on n'entraîne pas les rouleaux (22) n'ayant aucun rôle dans l'étirage.

5. Procédé selon l'une quelconque des revendications 1 à 4 caractérisé en ce qu'on met en œuvre des rouleaux (22) à vitesses tangentielles étagées de manière progressive.

6. Procédé selon l'une quelconque des revendications 1 à 5 caractérisé en ce qu'on entraîne les rouleaux (22) à l'aide d'un moteur (14) unique.

7. Procédé selon l'une quelconque des revendications 1 à 6 caractérisé en ce qu'on entraîne tous les rouleaux (22) à des vitesses angulaires différentes.

8. Procédé selon l'une quelconque des revendications 1 à 6 caractérisé en ce qu'on entraîne tous les rouleaux (22) à la même vitesse angulaire.

9. Dispositif d'étirage longitudinal en continu d'un film (20) en matière plastique qui comprend au moins trois rouleaux (22) entraînés à des vitesses tangentielles différentes, le film étant en contact avec au moins un premier rouleau (22$_4$) et un second rouleau (22$_5$) dont la vitesse tangentielle est supérieure à celle du premier rouleau (22$_4$) caractérisé en ce qu'il comporte des moyens de sélection (18, 46, 28, 24, 26) ayant pour fonction de sélectionner le nombre et ceux des rouleaux en engagement avec le film, ce qui permet de modifier la vitesse de défilement du film de son entrée à sa sortie et a pour résultat de faire varier le degré d'étirage du film par degrés successifs entre des valeurs prédéterminées, selon le rapport des vitesses tangentielles des rouleaux à la sortie et à l'entrée.

10. Dispositif selon la revendication 9 caractérisé en ce que les moyens de sélection comprennent des flasques (24, 26) sur lesquels sont tourillonnés les rouleaux (22) ; et un variateur (18, 28, 46) permettant d'orienter les flasques (24, 26).

11. Dispositif selon l'une quelconque des revendications 9 et 10 caractérisé en ce que les rouleaux (22) sont disposés autour d'une couronne motrice (38) et sont entraînés par cette couronne motrice (38) au moyen de pignons (44) solidaires des rouleaux (22) et engrenant la couronne motrice (38).

12. Dispositif selon l'une quelconque des revendications 9 et 11 caractérisé en ce que les rouleaux (22) sont de même diamètre D et les pignons (44) ont des diamètres différents d1, d2 ... dn.

13. Dispositif selon l'une quelconque des revendications 9 et 11 caractérisé en ce que les pignons (44) sont de même diamètre d et les rouleaux (22) ont des diamètres différents D1, D2 ... Dn.

14. Dispositif selon l'une quelconque des revendications 9 à 13 caractérisé en ce qu'il comporte un trajet sensiblement demi-cylindrique pour le film (20).

15. Dispositif selon l'une quelconque des revendications 9 à 14 caractérisé en ce que les rouleaux successifs (22) sont mûs à des vitesses tangentielles de plus en plus grandes.

16. Dispositif selon l'une quelconque des revendications 9 à 15 caractérisé en ce qu'il comporte n rouleaux (22), les moyens de sélection (18, 46, 28, 24, 26) ayant pour fonction d'engager p rouleaux de rang i à i + (p—1).

17. Dispositif selon la revendication 16 caractérisé en ce que les rouleaux (22) de rang 1 à p ont des vitesses tangentielles identiques.

18. Dispositif selon l'une quelconque des revendications 9 à 17 caractérisé en ce qu'il comporte des moyens supplémentaires d'adhérence du film sur les rouleaux (22).

19. Dispositif selon la revendication 18 caractérisé en ce que les moyens supplémentaires d'adhérence sont constitués par au moins un rouleau (50) ayant pour fonction d'appliquer le film sur un rouleau (22) sur un plus grand diamètre.

20. Dispositif selon la revendication 19 caractérisé en ce qu'un rouleau (50) est monté d'axe mobile pour être écarté des rouleaux (22).

21. Dispositif selon l'une quelconque des revendications 9 à 20 caractérisé en ce qu'il comporte deux rouleaux de renvoi (51) rapprochés l'un de l'autre pour que le contour du film se rapproche de celui d'un Ω.

22. Dispositif selon l'une quelconque des revendications 9 à 21 caractérisé en ce que les rouleaux (22) n'ayant aucun rôle dans l'étirage sont soit entraînés soit non entraînés.

23. Dispositif selon l'une quelconque des revendications 9 à 22 caractérisé en ce que le variateur (18) est asservi au déroulement d'un processus lié à l'utilisation du film étiré.

24. Dispositif selon l'une quelconque des revendications 9 à 23 caractérisé en ce que les rouleaux (22) sont revêtus d'un matériau présentant un fort coefficient de frottement vis-à-vis du matériau du film.

25. Dispositif selon l'une quelconque des revendications 9 à 24 caractérisé en ce que le film provient d'une bobine (53) logée dans l'espace délimité par les rouleaux (22).

## Claims

1. Process for the continuous longitudinal drawing of a plastic film (20), in which, on the one hand, at least three rollers (22) are driven at different tangential speeds and, on the other hand, the film is drawn longitudinally as a result of engagement on at least one first roller (22$_4$) and a second roller (22$_5$), the tangential speed of which is higher than that of the first roller, characterized in that the number of rollers and those of the rollers (22) in engagement with the film (20) are selected, thus making it possible to change the running speed of the film (20) from its entry ot its exit, the result of this being to vary the degree of drawing of the film (20) in successive steps between predetermined values, according to the ratio of the tangential speeds of the rollers (22) at exit and at entry.

2. Process according to Claim 1, characterized in that, in order to select the rollers (22) in engagement with the film (20), the orientation of flanges, in which the rollers pivot, is changed.

3. Process according to either one of Claims 1 and 2, characterized in that all the rollers (22), including those not performing any function in the drawing, are driven.

4. Process according to either one of Claims 1 and 2, characterized in that the rollers (22) not performing any function in the drawing are not driven.

5. Process according to any one of Claims 1 to 4, characterized in that rollers (22) operating at progressively stepped tangential speeds are used.

6. Process according to any one of Claims 1 to 5, characterized in that the rollers (22) are driven by means of a single motor (14).

7. Process according to any one of Claims 1 to 6, characterized in that all the rollers (22) are driven at different angular speeds.

8. Process according to any one of Claims 1 to 6, characterized in that all the rollers (22) are driven at the same angular speed.

9. Apparatus for the continuous longitudinal drawing of a plastic film (20), which comprises at least three rollers (22) driven at different tangential speeds, the film being in contact with at least one first roller $(22_4)$ and a second roller $(22_5)$, the tangential speed of which is higher than that of the first roller $(22_4)$, characterized in that it possesses selection means (18, 46, 28, 24, 26) performing the function of selecting the number of rollers and those of the rollers in engagement with the film, thus making it possible to change the running speed of the film from its entry to its exit, the result of this being to vary the degree of drawing of the film in successive steps between predetermined values, according to the ratio of the tangential speeds of the rollers at exit and at entry.

10. Apparatus according to Claim 9, characterized in that the selection means comprise flanges (24, 26), on which the rollers (22) pivot, and a variator (18, 28, 46) making it possible to orient the flanges (24, 26).

11. Apparatus according to either one of Claims 9 and 10, characterized in that the rollers (22) are arranged round a driving ring (38) and are driven by this driving ring (38) by means of pinions (44) fixed to the rollers (22) and meshing with the driving ring (38).

12. Apparatus according to either one of Claims 9 and 11, characterized in that the rollers (22) are of the same diameter D and the pinions (44) have different diameters d1, d2 ... dn.

13. Apparatus according to either one of Claims 9 and 11, characterized in that the pinions (44) are of the same diameter d and the rollers (22) have different diameters d1, D2 ... Dn.

14. Apparatus according to any one of Claims 9 to 13, characterized in that it has a substantially semi-cylindrical path for the film (20).

15. Apparatus according to any of Claims 9 to 14, characterized in that the successive rollers (22) are moved at increasingly high tangential speeds.

16. Apparatus according to any one of Claims 9 to 15, characterized in that it possesses n rollers (22), the selection means (18, 46, 28, 24, 26) performing the function of engaging p rollers of rank i to i + (p—1).

17. Apparatus according to Claim 16, characterized in that the rollers (22) of rank 1 to p have identical tangential speeds.

18. Apparatus according to any one of Claims 9 to 17, characterized in that it possesses additional means for adhesion of the film to the rollers (22).

19. Apparatus according to Claim 18, characterized in that the additional adhesion means consist of at least one roller (50) performing the function of laying the film onto a roller (22) over a larger diameter.

20. Apparatus according to Claim 19, characterized in that one roller (50) is mounted with a movable axle so as to be moved away from the rollers (22).

21. Apparatus according to any one of Claims 9 to 20, characterized in that it possesses two deflecting rollers (51) brought nearer to one another so that the contour of the film approaches that of a Q.

22. Apparatus according to any one fo Claims 9 to 21, characterized in that the rollers (22) not performing any function in the drawing are either driven or not driven.

23. Apparatus according to any one of Claims 9 to 22, characterized in that the variator (18) is governed by the flow of a process associated with the use of the drawn film.

24. Apparatus according to any one of Claims 9 to 23, characterized in that the rollers (22) are covered with a material having a high coefficient of friction relative to the material of the film.

25. Apparatus according to any one of Claims 9 to 24, characterized in that the film comes from a reel (53) accommodated in the space delimited by the rollers (22).

## Patentansprüche

1. Verfahren zum kontinuierlichen und longitudinalen Strecken eines Kunststoffilms, bei dem man einerseits wenigstens drei Rollen (22) mit unterschiedlichen Tangentialgeschwindigkeiten antreibt und andererseits den Film durch den Eingriff wenigstens einer ersten Rolle $(22_4)$ und einer zweiten Rolle

($22_5$), deren Tangentialgeschwindigkeit größer als die der ersten Rolle ist, der Länge nach streckt, dadurch gekennzeichnet, daß man die Anzahl der Rollen (22) und diejenigen, die sich mit dem Film (20) in Eingriff befinden, derart auswählt, daß damit eine Veränderung der Geschwindigkeit des Laufs des Films zwischen der Stelle seines Eintretens bis zur Stelle seines Austretens ermöglicht wird, mit der Folge, daß sich der Grad der Streckung des Filmes (20) sukzessiv zwischen vorbestimmten Werten entsprechend dem Verhältnis der Tangentialgeschwindigkeiten der Rollen (22) an der Stelle des Eintretens und der Stelle des Austretens ändert.

2. Verfahren nach Anspruch 1, dadurch gekennzeichnet, daß man zum Auswählen der Rollen (22), die im Eingriff mit dem Film (20) sind, die Orientierung von Scheiben, in denen sich die Rollen drehen, ändert.

3. Verfahren nach einem der Ansprüche 1 und 2, dadurch gekennzeichnet, daß man dabei alle Rollen (22) einschließlich derjenigen, welche zur Streckung keinen Beitrag leisten, antreibt.

4. Verfahren nach einem der Ansprüche 1 und 2, dadurch gekennzeichnet, daß man die Rollen (22), welche zur Streckung keinen Beitrag leisten, nicht antreibt.

5. Verfahren nach einem der Ansprüche 1 bis 4, dadurch gekennzeichnet, daß man Rollen (22) mit steigenden Tangentialgeschwindigkeiten einzetzt.

6. Verfahren nach einem der Ansprüche 1 bis 5, dadurch gekennzeichnet, daß man die Rollen (22) mit Hilfe eines einzigen Motors (14) antreibt.

7. Verfahren nach einem der Ansprüche 1 bis 6, dadurch gekennzeichnet, daß man alle Rollen (22) mit verschiedener Winkelgeschwindigkeit antreibt.

8. Verfahren nach einem der Ansprüche 1 bis 6, dadurch gekennzeichnet, daß man alle Rollen (22) mit gleicher Winkelgeschwindigkeit antreibt.

9. Vorrichtung zum kontinuierlichen und longitudinalen Strecken eines Kunststoffilms, mit wenigstens drei mit unterschiedlicher Tangentialgeschwindigkeit angetriebenen Rollen (22), wobei der Film wenigstens mit einer erste Rollen ($22_4$) und einer zweiten Rolle ($22_5$), deren Tangentialgeschwindigkeit größer als die der erste Rolle ($22_4$) ist, in Kontakt ist, dadurch gekennzeichnet, daß die Vorrichtung Auswahlmittel (18, 46, 28, 24, 26) aufweist, die zur Auswahl der Anzahl der Rollen und derjenigen, die mit dem Film in Eingriff sind, dienen, derart auszuwählen, daß sie eine Veränderung der Geschwindigkeit des Ablaufs des Films (20) von der Stelle seines Eintretens bis zur Stelle seines Austretens, ermöglichen, mit der Folge, daß sich der Grad der Streckung des Filmes sukzessiv zwischen vorbestimmten Werten entsprechend dem Verhältnis der Tangentialgeschwindigkeiten der Rollen an der Stelle des Eintretens und an der Stelle des Austretens ändert.

10. Vorrichtung nach Anspruch 9, dadurch gekennzeichnet, daß die Auswahlmittel Scheiben (24, 26), auf denen die Rollen (22) drehbar sind, und eine verstelleinrichtung (18, 28, 46), welche die Scheiben (24, 26) auszurichten erlaubt, aufweist.

11. Vorrichtung nach einem der Ansprüche 9 und 10, dadurch gekennzeichnet, daß die Rollen (22) um ein Antriebszahnrad (38) herum angeordnet sind und durch dieses Antriebszahnrad (38) mit Hilfe von mit den Rollen (22) verbundenen Zahnrädern (44), die in das Antriebszahnrad (38) eingreifen, angetrieben werden.

12. Vorrichtung nach einem der Ansprüche 9 und 11, dadurch gekennzeichnet, daß die Rollen (22) den gleichen Durchmesser D haben und die Zahnräder (44) unterschiedliche Durchmesser d1, d2 ... dn haben.

13. Vorrichtung nach einem der Ansprüche 9 und 11, dadurch gekennzeichnet, daß die Zahnräder (44) den gleichen Durchmesser d und die Rollen (22) unterschiedliche Durchmesser D1, D2 ... Dn haben.

14. Vorrichtung nach einem der Ansprüche 9 bis 13, dadurch gekennzeichnet, daß die Vorrichtung einen im wesentlichen halbzylindrische Bahn für den Film (20) aufweist.

15. Vorrichtung nach einem der Ansprüche 9 bis 14, dadurch gekennzeichnet, daß die aufeinanderfolgenden Rollen (22) mit zunehmend größerer Tangentialgeschwindigkeiten bewegt werden.

16. Vorrichtung nach einem der Ansprüche 9 bis 15, dadurch gekennzeichnet, daß die Vorrichtung n Rollen (22) aufweist, und daß die Auswahlmittel (18, 46, 28, 24, 26) die Funktion haben, einen Eingriff von p Rollen in der Reihenfolge i bis $i + (p - 1)$ herbeizuführen.

17. Vorrichtung nach Anspruch 16, dadurch gekennzeichnet, daß die Rollen (22) in der Reihenfolge 1 bis p die gleiche Tangentialgeschwindigkeit haben.

18. Vorrichtung nach einem der Ansprüche 9 bis 17, dadurch gekennzeichnet, daß die Vorrichtung zusätzliche Mittel aufweist, die eine Haftung des Films an den Rollen (22) bewirken.

19. Vorrichtung nach Anspruch 18, dadurch gekennzeichnet, daß die zusätzlichen Mittel zur Herbeiführung der Haftung durch wenigstens eine Rolle (50) gebildet werden, die die Funktion den Film an eine Rolle (22) entlang größerem Teil des Durchmessers anzulegen.

20. Vorrichtung nach Anspruch 19, dadurch gekennzeichnet, daß eine Rolle (50) auf einer beweglichen Achse angebracht und von den Rollen (22) wegbewegbar ist.

21. Vorrichtung nach einem der Ansprüche 9 bis 20, dadurch gekennzeichnet, daß die Vorrichtung zwei benachbart liegende Umlenkrollen (51) aufweist, um die der Film etwa nach Art eines Ω geführt ist.

22. Vorrichtung nach einem der Ansprüche 9 bis 21, dadurch gekennzeichnet, daß die Rollen (22), die nicht die Funktion einer Streckung des Films haben, entwader angetrieben oder nicht angetrieben sind.

23. Vorrichtung nach einem der Ansprüche 9 bis 22, dadurch gekennzeichnet, daß die Verstelleinrichtung (18) vor einem Prozeßablauf, der von der Verwendung des gestreckten Films abhängig ist, gesteuert wird.

24. Vorrichtung nach einem der Ansprüche 9 bis 23, dadurch gekennzeichnet, daß die Rollen (22) mit einem Material umhüllt sind, welches einen großen Reibungskoeffizienten gegenüber dem Filmmaterial aufweist.

25. Vorrichtung nach einem der Ansprüche 9 bis 24, dadurch gekennzeichnet, daß der Film von einer Spule (53) ausgeht, die in dem von den Rollen (22) begrenzten Zwischenraum gelagert ist.

## FIG.1

# FIG. 2

FIG. 3

FIG.4

FIG.5

FIG.6

FIG.7

FIG.8

3

FIG. 9

$23_1$ $23_2$ $23_3$ $23_4$

$22_1$ $22_2$ $22_3$ $22_4$ $22_5$
$(V_1)$ $(V_2)$ $(V_3)$ $(V_4)$ $(V_5)$

$20_s$

$20_e$

FIG. 10

$22_6$ $44_6$

$22_7$ $44_7$ 50 50 $22_5$

$44_5$

50 50

$44_8$ $22_4$

X + 46

$22_8$ $44_4$

38

$44_1$ $22_3$

$22_1$ 53 $44_3$

20 $44_2$ $22_2$

51

4